# EUROPÄISCHE PATENTSCHRIFT

(11) **EP 0 540 989 B1**
(45) Veröffentlichungstag und Bekanntmachung des Hinweises auf die Patenterteilung: **21.06.1995**
(21) Anmeldenummer: 92118361.2
(22) Anmeldetag: 28.10.1992
(51) Int. Cl.: F16H 3/08

(54) **Sechsgang-Stufengetriebe**
Six speed transmission
Transmission à six rapports

(30) Priorität: 06.11.1991 DE 4136455
(43) Veröffentlichungstag der Anmeldung: 12.05.1993
(73) Patentinhaber: GETRAG Getriebe- und Zahnradfabrik Hermann Hagenmeyer GmbH & Cie, D-71636 Ludwigsburg (DE)
(72) Erfinder: Knödel, Günter, W-7130 Mühlacker (DE); Henzler, Helga, W-7141 Murr (DE); Rack, Monika, W-7145 Markgröningen (DE)
(74) Vertreter: Witte, Alexander, Dr.-Ing.

(56) Entgegenhaltungen:
- EP-A- 0 046 373
- EP-A- 0 083 747
- EP-A- 0 207 910
- EP-A- 0 224 407
- EP-A- 0 239 553

## Beschreibung

Die Erfindung betrifft ein Sechsgang-Stufengetriebe mit den im Oberbegriff von Anspruch 1 aufgeführten Merkmalen.

Ein Sechsgang-Stufengetriebe der vorstehend genannten Art ist aus dem Dokument EP-A-0 046 373 bekannt, das allerdings als bekanntes Doppelkupplungsgetriebe ausgebildet ist, bei dem zwei Antriebswellen wechselweise in den Antriebsstrang gekuppelt werden.

Bei Stufengetrieben herkömmlicher Bauart, wie sie üblicherweise für Kraftfahrzeuge mit Standardantrieb, d.h. mit vorne und quer zur Fahrtrichtung angeordnetem Antriebsmotor eingesetzt werden, verwendet man meist eine Antriebswelle, in deren koaxialer Verlängerung sich die Abtriebswelle befindet. Parallel zu dieser Antriebs/Abtriebswelle befindet sich eine Vorgelege- oder Zwischenwelle, und zwischen diesen beiden Wellenanordnungen kämmen so viele Radpaare, wie Gänge des Getriebes vorgesehen sind. Hinsichtlich des Rückwärtsganges bedient man sich dann üblicherweise noch eines Zwischen- oder Umkehrrades, das auf einer weiteren Zwischenwelle frei drehbar gelagert ist.

Diese herkömmliche Bauweise von Stufengetrieben führt jedoch zu sehr langen Getrieben, wenn das Getriebe mit einer Vielzahl von Gängen versehen werden soll.

Andererseits geht die Entwicklungsrichtung im modernen Kraftfahrzeugbau bei Stufengetrieben zu immer höheren Gangzahlen, weil es bei höheren Gangzahlen besser möglich ist, den optimalen und damit verbrauchsarmen Drehzahlbereich des Antriebsmotors auszunutzen.

Außerdem geht eine weitere Entwicklungsrichtung des modernen Fahrzeugbaus dahin, den Antriebsmotor und das Getriebe in baulicher Vereinigung quer zur Längsrichtung des Fahrzeuges im Motorraum anzuordnen.

Aufgrunddessen bestehen im Getriebebau zwei widerstreitende Forderungen, nämlich einerseits möglichst viele Gänge im Getriebe vorzusehen, andererseits aber dem Getriebe eine möglichst kurze axiale Baulänge zu verleihen.

Vor diesem Hintergrund sind zahlreiche Getriebe bekannt geworden, bei denen nicht nur eine, sondern zwei oder mehr Zwischenwellen vorgesehen sind, um die verschiedenen Zahnradpaare in raumsparender Weise anordnen zu können. Bei einer Schnittdarstellung, in der die verschiedenen Wellen radial geschnitten werden, liegen in diesem Falle die Wellen auf den Eckpunkten eines unregelmäßigen Vielecks. Dies bedeutet, daß nur jeweils zwei der naturgemäß zueinander parallel verlaufenden Wellen eine gemeinsame Ebene definieren, während alle anderen Wellen außerhalb dieser Ebene liegen.

In dem eingangs genannten Dokument EP-A-0 046 373 sind drei verschiedene Sechsganggetriebe beschrieben. Die beiden ersten beschriebenen Sechsganggetriebe arbeiten mit insgesamt drei Zwischenwellen, wobei die dritte Zwischenwelle als Welle für ein Umkehrrad eines Rückwärtsganges dient.

Bei dem dritten beschriebenen Getriebe ist die Radsatzanordnung für den Rückwärtsgang dahingehend verändert, daß keine separate (dritte) Zwischenwelle mehr vorgesehen ist. Hierzu werden auf der ersten Zwischenwelle zwei starr miteinander verbundene Zahnräder unterschiedlichen Fußkreisdurchmessers vorgesehen. Das erste dieser beiden Zahnräder kämmt mit einem Festrad auf der Antriebswelle, während das zweite Zahnrad mit einem Losrad auf der zweiten Zwischenwelle kämmt. Auf diese Weise wird der Rückwärtsgang dadurch gebildet, daß der Kraftfluß von der Antriebswelle zunächst zur Drehrichtungsumkehr über das doppelte Zahnrad der ersten Zwischenwelle geleitet wird, das sich bei eingelegtem Rückwärtsgang frei auf der ersten Zwischenwelle drehen kann. Das ebenfalls im Kraftfluß befindliche Losrad auf der zweiten Zwischenwelle wird demgegenüber drehstarr mit der zweiten Zwischenwelle verbunden, so daß eine Verbindung zum Abtrieb hergestellt ist.

Während bei den beiden erstgenannten Ausführungsformen gemäß EP-A-0 046 373 insgesamt fünf Radsatzebenen mit drei Zwischenwellen erforderlich waren, wird auf die soeben beschriebene Weise beim dritten beschriebenen Ausführungsbeispiel zwar die dritte Zwischenwelle eingespart, jedoch eine zusätzliche Radsatzebene hinzugefügt, da für den Kraftfluß im Rückwärtsgang in zwei nebeneinanderliegenden Radsatzebenen gearbeitet werden muß.

Bei diesem Getriebe sind ferner die drei in zwei Richtungen verschiebbaren Schaltmuffen für den 1./3. bzw. 2./4. bzw. 5./Rückwärtsgang ausgelegt, während die eine nur in einer verschiebbare Schaltmuffe den sechsten Gang betätigt. Die in beiden Richtungen verschiebbaren Schaltmuffen betätigen somit sämtlich nicht-benachbarte Gänge.

Aus dem Dokument EP-A-0 083 747 ist noch ein weiteres Sechsgang-Stufengetriebe bekannt, das sehr ähnlich zu dem vorstehend beschriebenen Getriebe ist. Das weitere bekannte Getriebe arbeitet mit einer Doppelkupplung, d.h., daß statt einer einzigen Antriebswelle zwei koaxiale Antriebswellen eingesetzt werden. Darüber hinaus hat das Getriebe noch zwei Zwischenwellen, so daß außer der Abtriebswelle insgesamt vier Wellen vorhanden sind. Bei den Schaltmuffen, die sich auf den beiden Zwischenwellen befinden, sind wiederum die einzelnen Schaltmuffen, die in beiden Richtungen verschiebbar sind, nicht-benachbarten Gängen zugeordnet, nämlich dem 1./3., dem 2./6. sowie dem 4./R-Gang.

Bei einem aus dem Dokument EP-A-224 407 bekannten Sechsgang-Stufengetriebe sind insgesamt fünf zueinander parallele Wellen vorgesehen, nämlich eine Antriebswelle mit insgesamt sechs Festrädern, eine erste Zwischenwelle mit drei Losrädern und einem Festrad, eine zweite Zwischenwelle mit drei Losrädern und zwei Festrädern, eine dritte Zwischenwelle, die lediglich ein Umkehr-Losrad für den Rückwärtsgang trägt und schließlich eine Ausgangswelle mit einem Losrad, das über ein Differential mit der Ausgangswelle verbunden ist. Insgesamt umfaßt dieses bekannte Sechsganggetriebe daher siebzehn Zahnräder auf insgesamt fünf Wellen. Die axiale Baulänge dieses Getriebes wird durch die Welle mit den meisten Zahnrädern bestimmt, d.h. in diesem Falle durch die Antriebswelle mit den sechs Festrädern.

Bei dem bekannten Getriebe sind für den ersten, den zweiten, den dritten, den sechsten und den Rückwärtsgang jeweils separate Zahnradpaare vorgesehen, die jeweils aus einem Festrad der Antriebswelle und einem Losrad auf der ersten oder der zweiten Zwischenwelle bestehen. Lediglich im Falle des Rückwärtsganges ist noch das Umkehrrad auf der dritten Zwischenwelle zwischen das Festrad auf der Antriebswelle und das Festrad auf der zweiten Zwischenwelle geschaltet. Der gemeinsame Abtrieb von den Zwischenwellen auf die Ausgangswelle erfolgt über die beiden Festräder auf den Zwischenwellen, die gleichzeitig mit dem Differential-Zahnrad auf der Abtriebswelle kämmen. Lediglich für den vierten und den fünften Gang ist eine Anordnung getroffen, bei der ein Festrad auf der Antriebswelle mit einem Losrad auf der ersten Zwischenwelle sowie gleichzeitig mit einem Losrad auf der zweiten Zwischenwelle kämmt. Durch selektives drehfestes Verbinden eines dieser Losräder mit der sie jeweils tragenden Zwischenwelle kann daher wahlweise der vierte oder der fünfte Gang eingelegt werden.

Aus den bereits erwähnten Gründen ist jedoch die axiale Baulänge äußerst groß, insbesondere wegen der auf der Antriebswelle erforderlichen insgesamt sechs Zahnräder und der zusätzlich erforderlichen Zahnradebene für den Abtrieb.

Aus dem Dokument EP-A-207 910 ist ein Getriebe ähnlicher Bauart bekannt, das jedoch lediglich als Fünfgang-Getriebe ausgelegt ist. Dabei ist für jeden einzelnen der Gänge, d.h. für die fünf Vorwärtsgänge und für den Rückwärtsgang, jeweils ein separates Zahnradpaar vorgesehen. Dies führt bei einer Antriebswelle, zwei Zwischenwellen und einer Abtriebswelle zu einem Bedarf von insgesamt fünfzehn Zahnrädern, von denen alleine sechs nebeneinander auf der Antriebswelle angeordnet sind, so daß auch hier zuzüglich der erforderlichen Zahnradebene für den Abtrieb eine ebenso große axiale Baulänge entsteht, wie bei dem zuvor geschilderten Getriebe gemäß dem Dokument EP-A-224 407, obwohl das Getriebe gemäß dem Dokument EP-A-207 910 für einen Gang weniger ausgelegt ist.

Aus dem Dokument EP-A-239 553 ist ein weiteres Fünfgang-Stufengetriebe bekannt. Dieses bekannte Getriebe weist lediglich zwei Zwischenwellen auf, weil der Rückwärtsgang dadurch gebildet wird, daß der Kraftfluß über zwei miteinander kämmende Losräder auf den Zwischenwellen geführt wird, von denen eines einen zweiten Zahnkranz für den ersten Gang trägt und bei eingeschaltetem Rückwärtsgang als Losrad läuft, während das andere Rad auf der anderen Zwischenwelle bei eingeschaltetem Rückwärtsgang mit dieser Zwischenwelle drehfest verbunden wird.

Aber auch dieses bekannte Getriebe hat bei fünf Vorwärtsgängen eine erhebliche axiale Baulänge, weil sich auf der Antriebswelle immer noch fünf Zahnräder befinden, so daß sich zuzüglich der Zahnradebene für den Abtrieb eine nur geringfügig gegenüber den oben erläuterten Getrieben verminderte axiale Baulänge ergibt. Immerhin benötigt auch dieses bekannte Stufengetriebe für fünf Gänge noch vierzehn Zahnräder.

Der Erfindung liegt daher die Aufgabe zugrunde, ein Sechsgang-Stufengetriebe der eingangs genannten Art dahingehend weiterzubilden, daß die axiale Baulänge und die Anzahl der benötigten Zahnräder vermindert wird.

Diese Aufgabe wird erfindungsgemäß durch die im Anspruch 1 aufgeführten Merkmale gelöst.

Die der Erfindung zugrundeliegende Aufgabe wird auf diese Weise vollkommen gelöst. Bei dem erfindungsgemäßen Getriebe werden nämlich noch mehr Gangpaare in eine gemeinsame Zahnradebene gelegt, so daß nicht nur die axiale Baulänge, sondern auch die Anzahl der benötigten Zahnräder vermindert wird. So ist es bei Ausführungsformen der Erfindung, die weiter unten noch erläutert werden, möglich, die Gesamtzahl der Zahnräder auf vierzehn zu vermindern, wobei die maximale Zahnradzahl auf einer Welle auf insgesamt fünf reduziert werden kann. In der Praxis kann auf diese Weise ein Sechsgang-Stufengetriebe aufgebaut werden, das bei einem übertragbaren Drehmoment im Bereich zwischen 370 und 400 Nm bei sechs Vorwärtsgängen und einem synchronisierten Rückwärtsgang eine Baulänge von nur 330 mm aufweist. Diese Daten sind mit den herkömmlichen Stufengetrieben der oben erläuterten Art in keinem Falle zu erreichen, insbesondere nicht die genannte axiale Baulänge sowie die Einsparung von einem oder mehreren Zahnrädern. Hierbei ist zu berücksichtigen, daß im modernen Fahrzeugbau bereits kleinste Einsparungen an Abmessungen, Gewichten und Bauteilen zu ganz erheblichen Vorteilen führen können, beispielsweise dann, wenn - wie hier - durch ein neuartiges Getriebekonzept ein Einbau des Getriebes zusammen mit dem Motor quer zur Fahrtrichtung bei vorgegebener maximaler Fahrzeugbreite überhaupt erst möglich wird.

Bei einer bevorzugten Ausführungsform der Erfindung weist das mit der Abtriebswelle kämmende Zahnrad der ersten Zwischenwelle eine andere Zähnezahl als das mit der Abtriebswelle kämmende Zahnrad der zweiten Zwischenwelle auf.

Diese Maßnahme hat den Vorteil, daß unterschiedliche Vorderachsübersetzungen möglich sind.

Weitere Vorteile der Erfindung ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:
- Fig. 1: eine äußerst schematisierte und abgewickelte Seitenansicht eines ersten Ausführungsbeispiels eines erfindungsgemäßen Sechsgang-Stufengetriebes; und
- Fig. 2 bis 6: Schnittdarstellungen entlang der Linien II-II bis VI-VI von Fig. 1.

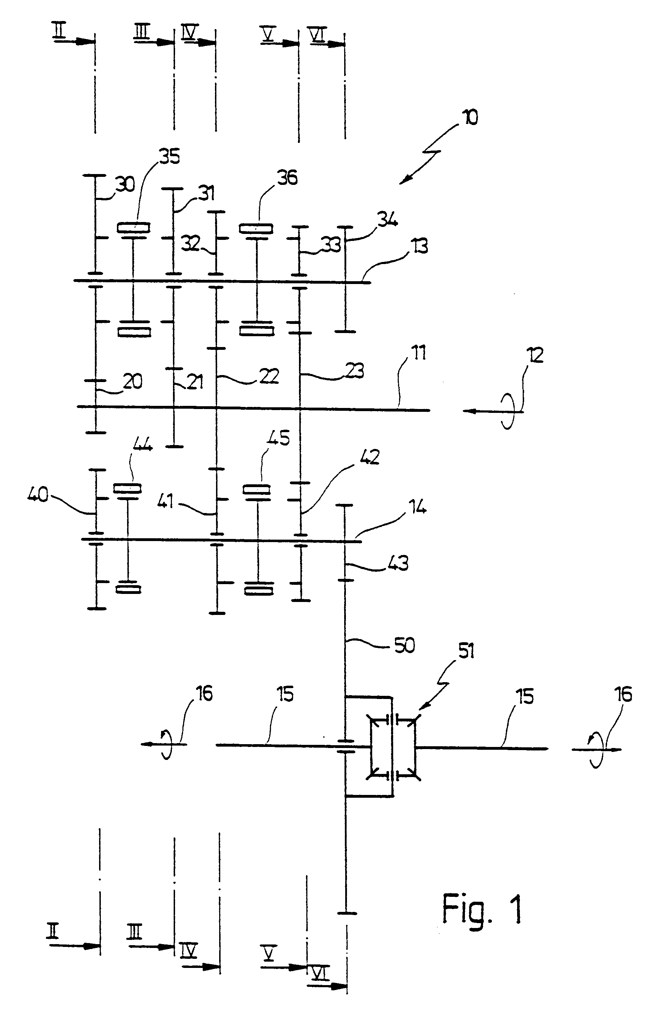

In Fig. 1 bezeichnet 10 insgesamt ein Sechsgang-Stufengetriebe, wie es vorzugsweise für ein Kraftfahrzeug eingesetzt werden soll.

Das Getriebe 10 weist eine Antriebswelle 11 auf, der Antriebsenergie über eine nicht dargestellte Kupplung von einem ebenfalls nicht dargestellten Motor zugeführt wird, wie mit einem Pfeil 12 angedeutet.

Parallel zur Antriebswelle 11 sind eine erste Zwischenwelle 13 sowie eine zweite Zwischenwelle 14 angeordnet. Abtriebswellen 15 erstrecken sich ebenfalls parallel zu den zuvor genannten Wellen 11, 13 und 14. An den Abtriebswellen 15 wird über die angetriebenen Räder des Kraftfahrzeuges die Abtriebsenergie abgenommen, wie mit Pfeilen 16 angedeutet.

Die Antriebswelle 11 ist mit vier als Festräder ausgebildeten Zahnrädern 20, 21, 22, 23 unterschiedlicher Durchmesser und Zähnezahlen versehen.

Auf der ersten Zwischenwelle 13 sind insgesamt vier als Losräder ausgebildete Zahnräder 30, 31, 32, 33 gelagert und ein als Festrad ausgebildetes Zahnrad 34 befestigt.

Mittels Schaltmuffen 35 und 36 können die Zahnräder 30, 31, 32, 33 in herkömmlicher Weise selektiv drehfest mit der ersten Zwischenwelle 13 verbunden werden.

Es versteht sich dabei, daß der Begriff "Schaltmuffe" insoweit lediglich beispielhaft zu verstehen ist, weil selbstverständlich im Rahmen der vorliegenden Erfindung alle Anordnungen verwendet werden können, mit denen ein Losrad drehfest mit der es tragenden Welle verbunden werden kann.

Auf der zweiten Zwischenwelle 14 sind als Losräder ausgebildete Zahnräder 40, 41 und 42 gelagert sowie ein als Festrad ausgebildetes Zahnrad 43 befestigt.

Auch hier sind Schaltmuffen 44 und 45 vorgesehen, um die Zahnräder 40, 41 und 42 jeweils einzeln selektiv drehfest mit der zweiten Zwischenwelle 14 verbinden zu können.

Auf den Abtriebswellen 15 läuft ein Zahnrad 50, das über ein herkömmliches Differential 51 mit den Abtriebswellen 15 verbunden ist.

Die Darstellung der Fig. 1 ist eine sogenannte abgewickelte Darstellung, in der die verschiedenen Zahneingriffe nicht sämtlich darstellbar sind, weil die Wellen 11, 13, 14 und 15 nicht in einer gemeinsamen Ebene liegen.

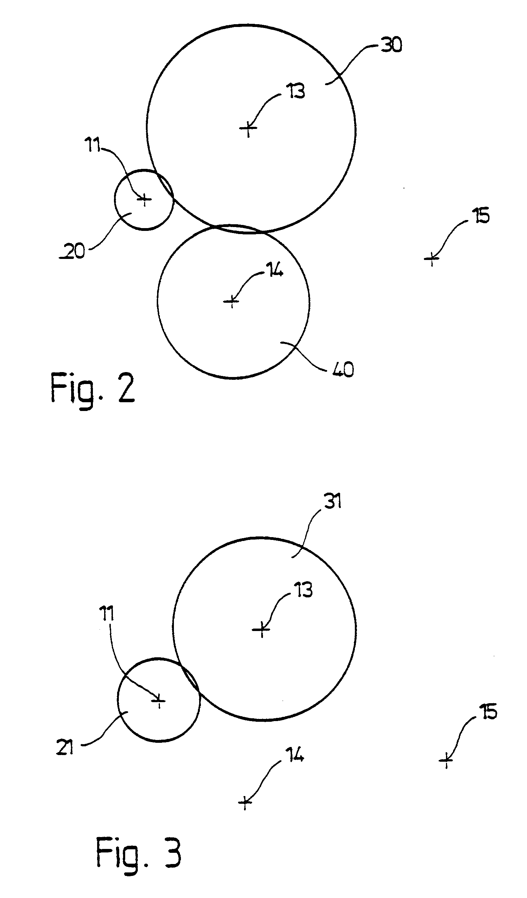

Vielmehr ist die Anordnung so getroffen, daß entgegen der abgewickelten Darstellung gemäß Fig. 1 auch die Zahnräder 30 und 40 sowie die Zahnräder 34 und 50 miteinander kämmen. Dies soll nachstehend anhand der Schnittdarstellungen der Fig. 2 bis 6 erläutert werden:
In Fig. 2 ist zu erkennen, daß das Festrad 20 auf der Antriebswelle 11 mit dem Losrad 30 auf der ersten Zwischenwelle 13 und dieses wiederum mit dem Losrad 40 auf der zweiten Zwischenwelle 14 kämmt. Die Abtriebswellen 15 sind in dieser Ebene unbesetzt. Entsprechend zeigt Fig. 3, daß das Festrad 21 auf der Antriebswelle 11 mit dem Losrad 31 auf der ersten Zwischenwelle 13 kämmt.

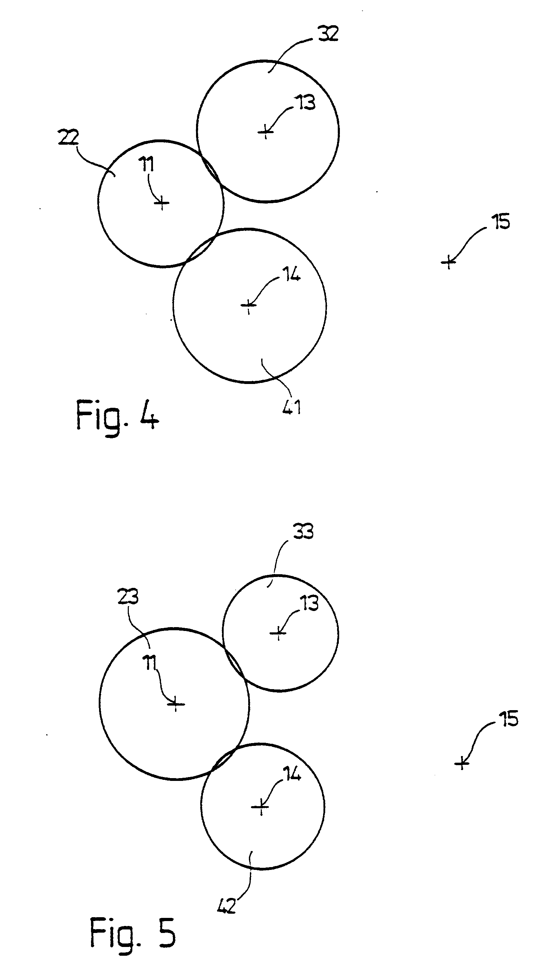

Entsprechend zeigt Fig. 4, daß das Festrad 22 auf der Antriebswelle 11 sowohl mit dem Losrad 32 auf der ersten Zwischenwelle 13 wie auch mit dem Losrad 41 auf der zweiten Zwischenwelle 14 kämmt.

Ein weiterer derartiger Radsatz ist in Fig. 5 dargestellt, wo erkennbar ist, daß das Festrad 23 auf der Antriebswelle 11 mit dem Losrad 33 auf der ersten Zwischenwelle 13 wie auch mit dem Losrad 42 auf der zweiten Zwischenwelle 14 kämmt.

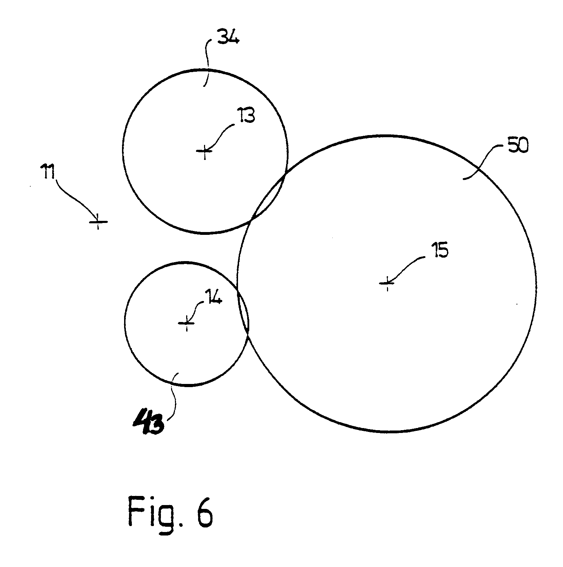

Schließlich zeigt Fig. 6, daS die Festräder 34 bzw. 43 auf den Zwischenwellen 13 bzw. 14 beide mit dem Zahnrad 50 auf den Abtriebswellen 15 kämmen. Die Antriebswelle 11 ist in dieser Ebene nicht besetzt. Man erkennt aus Fig. 6 deutlich, daß die Festräder 34 und 43 unterschiedliche Durchmesser aufweisen, so daß sie auch mit unterschiedlichen Zähnezahlen versehen sind. Dies ermöglicht, den beiden Zwischenwellen 13, 14 eine unterschiedliche Grundübersetzung, bezogen auf die Abtriebswelle 15, zu erteilen.

Aufgrund der vorstehend geschilderten Anordnung der Zahnräder ergeben sich folgende Kraftflüsse in den einzelnen Gängen:

Im ersten Gang ist die Schaltmuffe 35 nach links ausgelenkt. Der Kraftfluß läuft über die Antriebswelle 11, das Festrad 20, das Zahnrad 30, die erste Zwischenwelle 13, das Festrad 34 und das Zahnrad 50 über das Differential 51 auf die Abtriebswellen 15.

Im zweiten Gang befindet sich die Schaltmuffe 35 in der rechten Stellung, und der Kraftfluß fließt analog über die Antriebswelle 11, die Zahnräder 21 und 31, die erste Zwischenwelle 13 sowie die Zahnräder 34 und 50 auf die Abtriebswellen 15.

Im dritten Gang ist die Schaltmuffe 45 nach links ausgelenkt, und der Kraftfluß geht jetzt über die Antriebswelle 11, die Zahnräder 22 und 41, die zweite Zwischenwelle 14 und die Zahnräder 43 und 50 auf die Abtriebswellen 15.

Im vierten Gang ist die Schaltmuffe 45 nach rechts augelenkt, und der Kraftfluß läuft jetzt über die Antriebswelle 11, die Zahnräder 23 und 42, die zweite Zwischenwelle 14 und die Zahnräder 43 und 50 auf die Abtriebswellen 15.

Im fünften Gang ist die Schaltmuffe 36 nach links ausgelenkt, und der Kraftfluß läuft über die Antriebswelle 11, die Zahnräder 22 und 32, die erste Zwischenwelle 13 und die Zahnräder 34 und 50 auf die Abtriebswellen 15.

Im sechsten Gang ist hingegen die Schaltmuffe 36 nach rechts ausgelenkt, und der Kraftfluß läuft über die Antriebswelle 11, die Zahnräder 23 und 33, die erste Zwischenwelle 13 sowie die Zahnräder 34 und 50 auf die Abtriebswellen 15.

Im Rückwärtsgang ist die Schaltmuffe 35 gelöst und die Schaltmuffe 44 nach links ausgelenkt. Der Kraftfluß läuft jetzt über die Antriebswelle 11 und das Zahnrad 20 auf das jetzt als Losrad bzw. Umkehrrad mitlaufende Zahnrad 30 des ersten Ganges sowie das Zahmrad 40 auf die zweite Zwischenwelle 14 und von dort über die Zahnräder 43 und 50 auf die Abtriebswellen 15.

Wie man aus der Darstellung der Fig. 1 sieht, werden bei diesem Ausführungsbeispiel eines Sechsgang-Stufengetriebes somit auf der Antriebswelle 11 sowie der zweiten Zwischenwelle 14 nur jeweils vier Zahnräder und auf der ersten Zwischenwelle 13 fünf Zahnräder benötigt, insgesamt also mit dem Zwischenrad 50 des Abtriebes nur vierzehn Zahnräder.

## Patentansprüche

1. Sechsgang-Stufengetriebe mit:
- einer Antriebswellenanordnung (11);
- einer ersten Zwischenwelle (13);
- einer zweiten Zwischenwelle (14);
- einer Abtriebswelle (15);
- die Wellen (11, 13, 14, 15) sind zueinander parallel, jedoch nur jeweils paarweise in einer gemeinsamen Ebene angeordnet;
- einem ersten Radsatz (20/30) für den ersten Vorwärtsgang, bestehend aus einem Festrad (20) auf der Antriebswellenanordnung (11) sowie einem Losrad (30) auf der ersten Zwischenwelle (13);
- einem zweiten Radsatz (21/31) für den zweiten Vorwärtsgang, bestehend aus einem Festrad (21) auf der Antriebswelle (11) sowie einem Losrad (31) auf der ersten Zwischenwelle (13);
- einem dritten Radsatz (22/41) für den dritten Vorwärtsgang, bestehend aus einem Festrad (22) auf der Antriebswellenanordnung (11) sowie einem Losrad (41) auf einer der Zwischenwellen;
- einem vierten Radsatz (23/42) für den vierten Vorwärtsgang, bestehend aus einem Festrad (23) auf der Antriebswellenanordnung (11) sowie einem Losrad (42) auf einer der Zwischenwellen;
- einem fünften Radsatz (22/32) für den fünften Vorwärtsgang, bestehend aus einem Festrad (22) auf der Antriebswellenanordnung (11) sowie einem Losrad (32) auf einer der Zwischenwellen;
- einem sechsten Radsatz (23/33) für den sechsten Vorwärtsgang, bestehend aus einem Festrad (23) auf der Antriebswellenanordnung (11) sowie einem Losrad (33) auf einer der Zwischenwellen;
- einem siebten Radsatz (20/30/40) für den Rückwärtsgang, bestehend aus einem Festrad (20) auf der Antriebswellenanordnung (11) sowie einem ersten Losrad (30) auf der ersten Zwischenwelle (13) und einem zweiten Losrad (40) auf der zweiten Zwischenwelle (14), wobei das Festrad (20) das erste Losrad (30) antreibt und dieses mit dem zweiten Losrad (40) kämmt;
- einem achten Radsatz (34/43/50), bestehend aus jeweils einem auf der ersten Zwischenwelle (13) und auf der zweiten Zwischenwelle (14) angebrachten Festrad (34 und 43), wobei das jeweilige Festrad mit einem auf der Abtriebswelle (15) vorgesehenen Zahnrad (50) kämmt; und
- einer in einer axialen Richtung sowie drei in zwei axialen Richtungen verschiebbaren Schaltmuffen (35, 36, 44, 45) zum selektiven, drehstarren Verbinden der Losräder (30, 31, 32, 33, 34, 40, 41, 42) mit der sie jeweils tragenden Zwischenwelle (13, 14);
dadurch gekennzeichnet, daß
- die Antriebswellenanordnung aus einer Antriebswelle (11) besteht;
- das Losrad (41) des dritten Radsatzes (22/41) für den dritten Vorwärtsgang auf der zweiten Zwischenwelle (14) angeordnet ist;
- das Losrad (42) des vierten Radsatzes (23/42) für den vierten Vorwärtsgang auf der zweiten Zwischenwelle (14) angeordnet ist;
- das Losrad (32) des fünften Radsatzes (22/32) für den fünften Gang auf der ersten Zwischenwelle (13) angeordnet ist;
- das Losrad (33) des sechsten Radsatzes (23/33) für den sechsten Vorwärtsgang auf der ersten Zwischenwelle (13) angeordnet ist;
- das erste Losrad (30) des siebten Radsatzes (20/30/40) für den Rückwärtsgang mit dem zugehörigen Festrad (20) auf der Antriebswelle (11) kämmt, wobei der erste Radsatz und der siebte Radsatz in einer gemeinsamen Ebene liegen; und
- die in zwei axialen Richtungen verschiebbaren Schaltmuffen (35, 36, 45) jeweils zum Betätigen benachbarter Gänge (1./2., 3./4., 5./6.) und die in einer axialen Richtung verschiebbare Schaltmuffe (44) zum Betätigen des Rückwärtsganges ausgelegt sind.

2. Getriebe nach Anspruch 1, dadurch gekennzeichnet, daß das mit der Abtriebswelle (15) kämmende Festrad (34) der ersten Zwischenwelle (13) eine andere Zähnezahl als das mit der Abtriebwelle (15) kämmende Festrad (43) der zweiten Zwischenwelle (14) aufweist.

## Claims

1. A six gear stepped transmission, comprising:
- a drive shaft arrangement (11);
- a first intermediate shaft (13);
- a second intermediate shaft (14);
- an output shaft (15);
- the shafts (11, 13, 14, 15) being parallel to each other, however, being arranged only by pairs each within a common plane;
- a first set of gearwheels (20/30) establishing the first forward gear, consisting of a fixed wheel (20) on the drive shaft arrangement (11) and of a loose wheel (30) on the first intermediate shaft (13);
- a second set of gearwheels (21/31) establishing the second forward gear, consisting of a fixed wheel (21) on the drive shaft arrangement (11) and of a loose wheel (31) on the first intermediate shaft (13);
- a third set of gearwheels (22/41) establishing the third forward gear, consisting of a fixed wheel (22) on the drive shaft arrangement (11) and of a loose wheel (41) on one of the intermediate shafts;
- a fourth set of gearwheels (23/42) establishing the fourth forward gear, consisting of a fixed wheel (23) on the drive shaft arrangement (11) and of a loose wheel (42) on one of the intermediate shafts;
- a fifth set of gearwheels (22/32) establishing the fifth forward gear, consisting of a fixed wheel (22) on the drive shaft arrangement (11) and of a loose wheel (32) on one of the intermediate shafts;
- a sixth set of gearwheels (23/33) establishing the sixth forward gear, consisting of a fixed wheel (23) on the drive shaft arrangement (11) and of a loose wheel (33) on one of the intermediate shafts;
- a seventh set of gearwheels (20/30/40) establishing the reverse gear, consisting of a fixed wheel (20) on the drive shaft arrangement (11) and of a first loose wheel (30) on the first intermediate shaft (13) as well as of a second loose wheel (40) on the second intermediate shaft (14), the fixed wheel (20) driving the first loose wheel (30), the latter meshing with the second loose wheel (40);
- an eigth set of gearwheels (34/43/50), consisting of one each fixed gearwheel (34 and 43) on the first intermediate shaft (13) and on the second intermediate shaft (14), respectively, the respective fixed wheel meshing with a toothed wheel (50) on the output shaft (15); and
- one gearshift sleeve (44) being displaceable in an axial direction as well as three gearshift sleeves (35, 36, 45) being displaceable in two axial directions for selectively connecting the loose wheels (30, 31, 32, 33, 34, 40, 41, 42) with the respective intermediate shaft (13, 14), carrying same in a torque-transmitting manner;
characterized in that
- the drive shaft arrangement consists of a drive shaft (11);
- the loose wheel (41) of the third set of gearwheels (22/41) establishing the third forward gear is arranged on the second intermediate shaft (14);
- the loose wheel (42) of the fourth set of gearwheels (23/42) establishing the fourth forward gear is arranged on the second intermediate shaft (14);
- the loose wheel (32) of the fifth set of gearwheels (22/32) establishing the fifth forward gear is arranged on the first intermediate shaft (13);
- the loose wheel (33) of the sixth set of gearwheels (23/33) establishing the sixth forward gear is arranged on the first intermediate shaft (13);
- the first loose wheel (30) of the seventh set of gearwheels (20/30/40) establishing the reverse gear meshing with the corresponding fixed wheel (20) on the drive shaft (11), the first set of gearwheels and the seventh set of gearwheels lying within a common plane; and
- the gearshift sleeves (35, 36, 45) being displaceable in two axial directions are dimensioned for actuating neighbored gears (1./2., 3./4., 5./6.) and the gearshift sleeve (44) being displaceable in one axial direction is dimensioned for actuating the reverse gear.

2. The transmission of claim 1, characterized in that the fixed wheel (34) of the first intermediate shaft (13) meshing with the output shaft (15) is provided with a different number of teeth as compared with the fixed wheel (43) on the second intermediate shaft (14) meshing with the output shaft (15).

## Revendications

1. Transmission à six rapports, comportant :
- un moyen d'arbre primaire (11) ;
- un premier arbre intermédiaire (13) ;
- un second arbre intermédiaire (14) ;
- un arbre de sortie (15),
- les arbres (11, 13, 14, 15) étant parallèles entre eux, mais disposés toutefois deux par deux dans un même plan ;
- un premier jeu d'engrenages (20/30) pour le premier rapport de marche avant, constitué par un pignon fixe (20) monté sur le moyen d'arbre primaire (11) et par un pignon libre (30) monté sur le premier arbre intermédiaire (13) ;
- un deuxième jeu d'engrenages (21/31) pour le deuxième rapport de marche avant, constitué par un pignon fixe (21) monté sur le moyen d'arbre primaire (11) et par un pignon libre (31) monté sur le premier arbre intermédiaire (13) ;
- un troisième jeu d'engrenages (22/41) pour le troisième rapport de marche avant, constitué par un pignon fixe (22) monté sur le moyen d'arbre primaire (11) et par un pignon libre (41) monté sur l'un des arbres intermédiaires ;
- un quatrième jeu d'engrenages (23/42) pour le quatrième rapport de marche avant, constitué par un pignon fixe (23) monté sur le moyen d'arbre primaire (11) et par un pignon libre (42) monté sur l'un des arbres intermédiaires ;
- un cinquième jeu d'engrenages (22/32) pour le cinquième rapport de marche avant, constitué par un pignon fixe (22) monté sur le moyen d'arbre primaire (11) et par un pignon libre (32) monté sur l'un des arbres intermédiaires ;
- un sixième jeu d'engrenages (23/33) pour le sixième rapport de marche avant, constitué par un pignon fixe (23) monté sur le moyen d'arbre primaire (11) et par un pignon libre (33) monté sur l'un des arbres intermédiaires ;
- un septième jeu d'engrenages (20/30/40) pour la marche arrière, constitué par un pignon fixe (20) monté sur le moyen d'arbre primaire (11) et par un premier pignon libre (30) monté sur le premier arbre intermédiaire (13) et un second pignon libre (40) monté sur le second arbre intermédiaire (14), dans lequel le pignon fixe (20) entraîne le premier pignon libre (30), ce dernier étant en prise avec le second pignon libre (40) ;
- un huitième jeu d'engrenages (34/43/50) constitué par un pignon fixe (34) et un pignon fixe (43) disposés respectivement sur le premier arbre intermédiaire (13) et sur le second arbre intermédiaire (14), chacun de ces pignons fixes étant en prise avec un engrenage (50) prévu sur les arbres de sortie (15) ; et
- quatre manchons de couplage (35, 36, 44, 45) dont l'un coulisse dans une direction axiale, et les trois autres dans les deux directions axiales, pour rendre solidaires en rotation, d'une façon sélective, les pignons libres (30, 31, 32, 33, 34, 40, 41, 42) avec les arbres intermédiaires correspondants (13, 14) qui les supportent ;
caractérisée en ce que :
- le moyen d'arbre primaire est constitué par un arbre primaire (11) ;
- le pignon libre (41) du troisième jeu d'engrenages (22/41) utilisé pour le troisième rapport de marche avant est monté sur le second arbre intermédiaire (14) ;
- le pignon libre (42) du quatrième jeu d'engrenages (23/42) utilisé pour le quatrième rapport de marche avant est monté sur le second arbre intermédiaire (14) ;
- le pignon libre (32) du cinquième jeu d'engrenages (22/32) utilisé pour le cinquième rapport de marche avant est monté sur le premier arbre intermédiaire (13) ;
- le pignon libre (33) du sixième jeu d'engrenages (23/33) utilisé pour le sixième rapport de marche avant est monté sur le premier arbre intermédiaire (13) ;
- le premier pignon libre (30) du septième jeu d'engrenages (20/30/40) utilisé pour le rapport de marche arrière est en prise avec le pignon fixe (20) correspondant de l'arbre primaire (11), le premier jeu d'engrenages et le septième jeu d'engrenages étant situés dans un même plan ; et
- les manchons de couplage qui coulissent dans deux directions axiales (35, 36, 45) étant prévus pour enclencher, chacun, des rapports voisins (1 et 2, 3 et 4, 5 et 6), le manchon de couplage (44) qui ne coulisse que dans une seule direction axiale servant à enclencher la marche arrière.

2. Transmission selon la revendication 1, caractérisée en ce que le pignon fixe (34) du premier arbre intermédiaire (13) qui est en prise avec l'arbre de sortie (15) comporte un nombre de dents différent de celui du pignon fixe (43) du second arbre intermédiaire (14) en prise avec l'arbre de sortie (15).
